(19)

Europäisches
Patentamt
European
Patent Office
Office européen
des brevets

(11) **EP 2 385 494 A1**

(12) **EUROPEAN PATENT APPLICATION**

(43) Date of publication:
**09.11.2011 Bulletin 2011/45**

(51) Int Cl.:
***G06T 5/00*** (2006.01)

(21) Application number: **10004848.7**

(22) Date of filing: **07.05.2010**

<table>
<tr><td>(84) Designated Contracting States:<br><b>AL AT BE BG CH CY CZ DE DK EE ES FI FR GB<br>GR HR HU IE IS IT LI LT LU LV MC MK MT NL NO<br>PL PT RO SE SI SK SM TR</b><br>Designated Extension States:<br><b>BA ME RS</b></td><td>• <b>Universiteit Gent<br>9000 Gent (BE)</b><br><br>(72) Inventor: <b>Goossens, Bart<br>9420 Burst (BE)</b></td></tr>
<tr><td>(71) Applicants:<br>• <b>IBBT vzw<br>9050 Ledeberg (BE)</b></td><td>(74) Representative: <b>Plas, Axel Ivo Michel et al<br>IP HILLS NV<br>Hubert Frère-Orbanlaan 329<br>9000 Gent (BE)</b></td></tr>
</table>

(54) **A method and device for estimating noise in a reconstructed image**

(57) The method for estimating noise in a reconstructed image (101) through post-processing according to the invention comprises the following steps:
- dividing (102) the reconstructed image (101) to generate image segments;
- applying a multi-resolution transformation (103) or directional filter bank on at least part of the image segments to generate transformed image segments; and

- for each transformed image segment:
- estimating a direction dependent noise power $S_0(\theta)$;
- estimating a noise covariance matrix;
- estimating a sub-band covariance matrix of noise and signal for the multi-resolution transformation;
- estimating a kurtosis parameter T of the signal;
- calculating a signal covariance matrix; and
- calculating a noise covariance matrix in the transformed image segment.

Fig. 1

**Description**

**Field of the Invention**

The present invention generally relates to estimating noise in a reconstructed image, like for instance a computed tomography or CT image, a positron emission tomography or PET image, a Single Photon Emission Computed Tomography or SPECT image, or a PET/CT image.

**Background of the Invention**

Estimating and reducing noise can be performed in the raw data / projection space or it can be performed in the image space. When performed in the raw data/ projection space the processing is done on the sinograms. Compared to existing techniques where the processing is done in sinogram space, post processing of reconstructed images offers the advantage that existing scanner hardware can be reused and that image space information such as the presence of tissues, vains, etc. can be incorporated in the estimation. As a result, a better reconstruction of details will be achieved.

In the article *"Low-Dose CT Image Denoising by Locally Adaptive Wavelet Domain Estimation"*, published at the IEEE Benelux EMBS Symposium of 6-7 December 2007, the authors B. Goossens, J. De Bock, A. Pizurica and W. Philips have disclosed segmenting CT images and estimating local noise statistics in order to remove more accurately noise-induced streak artefacts from CT images through post-processing. Although the article fails to teach the implementation, it recognizes the location dependent nature of noise in CT images, and proposes segmentation, wavelet transformation, and estimating the local noise statistics within each segment in order to remove correlated noise without the necessity to increase the CT dose or to re-scan the patient.

The EMBS Symposium article fails to teach the implementation. Although the EMBS Symposium article recognizes the problem of location dependent noise statistics, it does not address the problem of direction dependent noise characteristics. Indeed, tissue densities vary with the projection angle. As a result it is possible that the photon detectors receive a smaller number of photons for some projection angles than for others. Because receiving fewer photons corresponds to increased noise, such projection angles will contribute more to the noise power than other angles. The noise power is direction or orientation dependent.

*United States Patent Application* US 2008/0095462 from the inventors Hsieh et al*., entitled "Methods and Apparatus for Noise Estimation",* describes another prior art method for estimating noise in reconstructed images. US 2008/0095462 describes a multi-resolution technique for reducing noise in CT scans via post processing that makes use of an empirical method to determine the equivalent volume of water that would give the same attenuation. Just like the EMBS Symposium article, the method known from US 2008/0095462 recognizes that the attenuation is location dependent, but fails to identify and resolve the direction dependence of noise in CT scans. Further, as is recognized in a later patent application of the same inventors, US 2009/0232269, a major obstacle for implementing the method known from US 2008/0095462 is the estimation of the noise properties in the image which is done empirically.

The above mentioned second patent application US 2009/0232269 *from Hsieh et al., entitled "Methods and Apparatus for Noise estimation for Multi-Resolution Anisotropic Diffusion Filtering",* addresses the drawbacks of the first patent application by making two scans of the same object nearly simultaneously. From the raw data of the two scans the noise map is estimated and this noise map is used to estimate the noise and denoise the image. Although this second patent application of Hsieh et al. seems to recognize the anisotropic nature of the noise, it operates on raw data and requires at least two scans to be taken from the patient at substantially the same point in time in substantially the same direction. As a consequence, the radiation dose an object is exposed to is doubled, which limits the clinical application, in particular for children and women.

It is an objective of the present invention to disclose an improved method for estimating noise in reconstructed images that overcomes the drawbacks of the above mentioned prior art solutions. In particular, it is an objective to avoid rescanning at a higher dose and to operate in image space such that the invention becomes applicable on existing scanners and prior information such as the presence of vains, tissue, etc. can be incorporated in the estimation. It is a further objective to disclose a method, device and software for more accurately estimating noise in reconstructed images that quantifies the orientation selective nature of noise. It is a further objective of the present invention to introduce a method, device and software for estimating noise in reconstructed images that takes into account the algorithm used for reconstructing the image, e.g. the Filtered Back Projection or FBP algorithm.

**Summary of the Invention**

According to the invention, the above identified shortcomings of the prior art are resolved by the method for estimating noise in a reconstructed image through post-processing of the reconstructed image as defined by claim 1, the method comprising the steps of:

- dividing the reconstructed image to thereby generate image segments;
- applying a multi-resolution transformation or directional filter bank on at least part of the image segments to thereby generate transformed image segments; and
- for each transformed image segment:
- estimating a direction dependent noise power $S_0(\theta)$;
- estimating a noise covariance matrix;
- estimating a sub-band covariance matrix of noise and signal for the multi-resolution transformation;
- estimating a kurtosis parameter T of the signal;
- calculating a signal covariance matrix; and
- calculating a noise covariance matrix in the transformed image segment.

The invention is based on the insight that noise in reconstructed images like CT scans is direction dependent. Streak artefacts that are caused by inconsistencies in the measurement data due to e.g. x-ray photon starvation, patient motion, undersampling, the presence of metal, etc. result in straight lines in the image domain that may annoy the radiologist or cause wrong diagnosis with the physician. Even a small error in one measurement may lead to such a streak artefact in the image when for instance the Filtered Back Projection (FBP) algorithm is used for reconstructing the image. The invented method estimates the orientation selective noise and correlated noise by taking into account the direction θ and knowledge of the reconstruction algorithm. The invention further adopts segmentation and a multi-resolution transformation in order to estimate the local noise power spectral density. Some efficient multi-resolution algorithms include wavelets, shearlets, curvelets, etc. Thus, even if it is assumed that the noise power spectral density is constant within each segment, the current invention shall estimate within each segment the local power spectral density and consequently quantify the spatial dependence of the noise. The method estimates the noise on the reconstructed images, e.g. CT images, thereby better preserving fine image structures like bronchi. The noise estimation in other words only involves post processing such that existing commercial scanners can still be used and prior information such as the presence of vessels, tissue, vains, etc. can be taken into account to reduce the smoothing artefacts in comparison with a technique that would operate in sinogram space. The overall image quality is significantly improved without altering the radiation dose. As an alternative to the multi-resolution transformation or as part of the multi-resolution transformation, a directional filter bank may be applied. Such directional filter bank comprises a set of high frequency bandpass filters sensitive to structures with certain direction, e.g. 10˚, 45˚, etc. While noise suppression benefits from using an entire multi-resolution transform, noise estimation can also be performed solely using such directional filter bank, i.e. without further decomposition in frequency scales.

By dividing the reconstructed image in segments, saturated areas will be detected automatically. In addition, dividing the image in segments may bring other benefits: certain areas like for instance lungs may be treated differently for noise estimation, irrelevant areas such as the air surrounding a patient may be excluded from further processing to reduce the processing time.

Optionally, as defined by claim 2, the multi-resolution transformation in the method for estimating noise in a reconstructed image according to the current invention, comprises a wavelet transformation, a curvelet transformation or a shearlet transformation.

A wavelet transformation, e.g. the Discrete Wavelet Transform or DWT, is advantageous in the context of the current invention because of its good spatial localization properties. The wavelet transformation decomposes the image over a set of basis functions that allows retrieving information both in frequency bands and at spatial positions. This is for instance not possible with the Discrete Fourier transform or DFT that completely de-correlates the noise as a result of which it does not allow to retrieve information at particular positions in the spatial domain.

Further optionally, as defined by claim 3, the wavelet transformation in the method for estimating noise in a reconstructed image according to the current invention consists of a Dual-Tree Complex Wavelet Transformation or DT-CWT.

The Dual-Tree Complex Wavelet Transformation or DT-CWT is preferred in the direction sensitive noise estimation method according to the present invention because it offers superior performance for denoising. Its nearly shift-invariant representation leads to a better denoising performance. Further, the DT-CWT has a better orientation selectivity than the Discrete Wavelet Transform or DWT. Whereas the DWT offers an orientation selectivity K equal to 3, i.e. noise estimation becomes possible in 3 orientation bands, the orientation selectivity parameter K equals 6 for the DT-CWT enabling noise estimation in 6 orientation bands. The DT-CWT is also advantageous because it does not suffer from the checkerboard problem. As a result of the checkerboard problem, the traditional DWT cannot distinguish the direction - 45˚ from the direction +45˚. Both directions will appear in the same DWT sub-band, which is not the case when the DT-CWT is used.

It is noticed that with shearlet and curvelet transformations that are viable alternatives for use in the noise estimation method according to the present invention, the orientation selectivity may even be higher. Typically the parameter K is 8 or 16 there. The spatial selectivity however decreases with increasing orientation selectivity K imposing a trade-off. Transformations like shearlets are also more processing intensive than complex wavelets, but may gain importance in the future when processors with higher capacity become available.

According to another optional aspect of the invented method for estimating noise in a reconstructed image, defined by claim 4, the step of estimating the direction dependent noise power $S_0(\theta)$ may be based on a Bayesian estimator.

Indeed, the preferred estimators for direction dependent noise power are robust estimators and Bayesian estimators. In theory it is however possible to select an estimator that does not belong to any of these two classes. The estimator will be selected as a trade-off between computational costs and efficiency, i.e. its ability to suppress noise while preserving details.

In a particular implementation of the method for estimating noise in a reconstructed image according to the current invention, the estimator consists of the MAD estimator. This implementation is defined by claim 5.

The MAD estimator is known from the article "De-noising by soft-thresholding" from the author D.L. Donoho. This article was published in May 1995 in IEEE Trans. Inform. Theory, vol. 41, pages 613-627. For the k'th orientation band of the DT-CWT, the MAD estimator for the direction dependent noise power, $S_0(\theta_k)$, corresponds to:

$$\hat{S}_0(\theta_k) = A_k^{-1}\left(\frac{\text{median}_j\left|y_j^{(1,k)}\right|}{0.6745}\right)^2 \qquad (1)$$

Herein:

> k represents the orientation band index;
> $\theta_k$ represents the dominant orientation angle of the complex wavelet for orientation k;
> $S_0(\theta_k)$ represents the MAD estimator for the noise power in the k'th orientation band;
> j represents a one dimensional integer index, j = 1 ... N, denoting the spatial position like in raster scanning; and
> $y_j$ represents the observed wavelet coefficient;
> $A_k$ represents a power normalisation constant that depends on the wavelet filters and can be computed offline as follows:

$$A_k = \int_0^{\pi} d\theta \int_0^{\pi} d\omega |\omega| |G(\omega)|^2 \left|H^{1,\theta_k}(\theta,\omega)\right|^2 \qquad (2)$$

> Herein, G denotes the frequency response of the smoothing filter used during reconstruction, e.g. the Filtered Back Projection or FBP algorithm, and H denotes the frequency response of the wavelet filter.

As is indicated by claim 6, the step of dividing the reconstructed image may comprise segmenting the reconstructed image in non-overlapping segments.

Thus, non-overlapping image segments may be generated through a segmentation algorithm. Within such non-overlapping segments, the noise variance can be assumed constant as will be explained further. This will reduce the processing time required by the method according to the invention. At the segment borders, the noise variance will show discontinuities but the effect thereof on the noise estimation and eventual noise reduction in the reconstructed image is negligible.

Optionally, as defined by claim 7, segmenting the reconstructed image in the method for estimating noise in a reconstructed image according to the present invention comprises one or more of the following:

- a watershed segmentation;
- a threshold segmentation algorithm;
- a connected components algorithm;
- a region merging algorithm; and
- skipping non-interesting segments.

Thus, the noisy image is first processed using a watershed segmentation algorithm or threshold segmentation algorithm to generate image segments wherein the local noise statistics assumptions are valid. The segmentation is needed in order to separate the non-interesting areas, e.g. air or scanner surface, from the interesting areas, e.g. the patient. The segmenting further enables to cope with image saturation, e.g. through intensity windowing, and allows to treat certain areas, e.g. the liver, long, vessels, vain, tissue, ... differently in order to keep track of details in the images. The segmentation algorithm may optionally be supplemented with region merging, connecting components, and skipping non-interesting segments like the air surrounding the patient and saturated regions in order to optimize the processing time.

As is further indicated by claim 8, the method for estimating noise in a reconstructed image according to the present invention may assume local noise stationarity within a segment.

Thus, within non-overlapping segments it may be assumed that the Noise Power Spectral Density (NPSD) is constant. In general, the noise power distribution may vary with the position in the image. Many reconstructed images however contain closed regions that are bounded by areas of high intensities. If the intensities in the surrounding part of a region are approximately of the same magnitude, then the noise in the closed region is approximately stationary. As a result, it can be assumed that $S_0(\theta)$ does not depend on the position in this region but only on the angle $\theta$. The segmentation algorithm in this case will be designed and parameterised to arrive at segments or regions of constant $S_0$ $(\theta)$. Local noise stationarity in other words assumes that the noise statistics are constant within an area, and is obtained by a-priori definition of segment blocks. It is noticed that the directional dependence of the NPSD is independent of the local stationarity assumption. Only in the exceptional case where the noise is strictly stationary the NPSD will be direction-independent, at least for parallel beam Computed Tomography.

As an alternative to segmenting into non-overlapping segments, the step of dividing the reconstructed image may result in overlapping segments or windows, as is indicated by claim 9.

Indeed, using a scanning window approach, the reconstructed image can be divided in overlapping segments, also named windows. Using the scanning window approach a noise estimation is made for each position in the reconstructed image, whereas in case of non-overlapping segments the noise statistics may be assumed constant within a segment. As a result, the scanning window technique avoids discontinuities near segment borders at the cost of increased processing requirements.

Alternatively, as is indicated by claim 10, the method for estimating noise in a reconstructed image according to the present invention may assume a position dependent noise power spectral density (NPSD).

Indeed, a position dependent PSD may be used in case of scanning window. In particular when dealing with strong directional streaking artefacts, the noise estimation will be significantly improved when using a position dependent PSD, at the cost of increased processing time however.

Further optionally, as defined by claim 11, the method for estimating noise in a reconstructed image according to the present invention may comprise the additional step of denoising the image segments to thereby generate noise-reduced image segments constituting a noise-reduced reconstructed image.

The accurate noise estimate that is obtained in the current invention taking into account the local noise spectral density and directivity in other words may be used to filter the reconstructed image and generate a denoised image with visually improved image quality. Correlated noise and anisotropic noise like streaking artefacts will be removed from the image while preserving details such as the presence of tissue, vains, etc.

Further optionally, as defined by claim 12, the method according to the invention may comprise the additional step of estimating noise in a corresponding sinogram from noise estimated in the reconstructed image.

In other words, through forward projection the noise estimation in the image domain may be used to estimate the noise in the projection domain or sinogram domain. This way, the current invention becomes useful for noise estimation in both the reconstructed images and the raw data.

In addition to the method for estimating noise as defined by claim 1, the current invention also concerns a corresponding device for estimating noise in a reconstructed image through post-processing, as defined by claim 13, and a corresponding software program for estimating noise in a reconstructed image through post-processing, as defined by claim 14.

## Brief Description of the Drawings

Fig. 1 illustrates an embodiment of the noise estimation method in a reconstructed image in accordance with the current invention; and

Fig. 2 illustrates the noise PSD in case of Filtered Back Projection reconstruction with a smoothing Hann filter.

## Detailed Description of Embodiment(s)

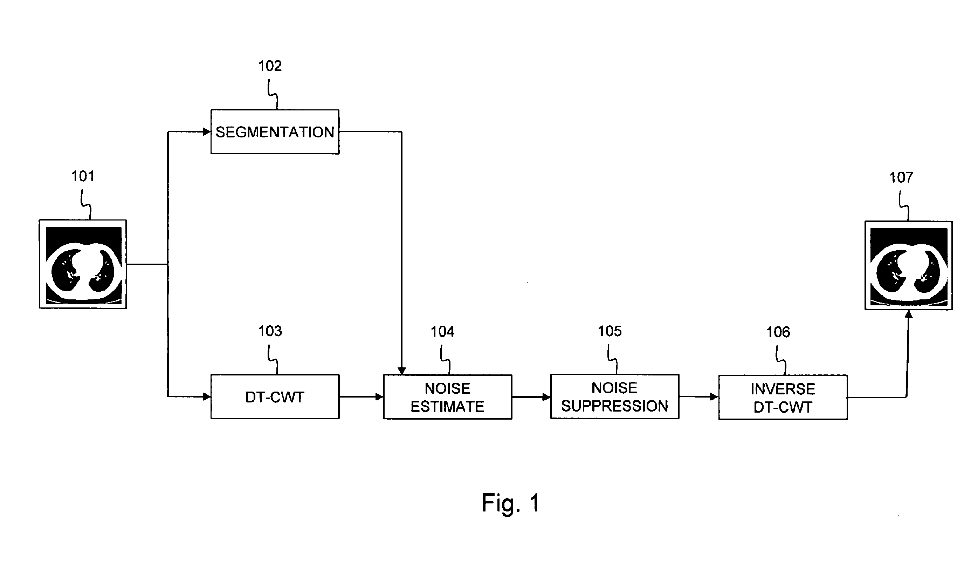

Fig. 1 illustrates an embodiment of the invented method for estimation and removal of noise applied to a noisy reconstructed low-dose CT image 101. Firstly, a segmentation algorithm followed by a region merging procedure is applied as is indicated by 102. The further processing of segments that are not of interest, e.g. the air surrounding the patient and saturated regions of the body, is skipped. Simultaneously, each slice of the CT volume is multi-resolution transformed using the Dual-Tree Complex Wavelet Transform or DT-CWT in 103. It is assumed that the Noise Power Spectral Density or NPSD is constant within each orientation sub-band of each segment. Next, in step 104, the noise is estimated in every segment. The technique used thereto is adapted to the noise PSD in each segment and orientation, and will be described in more detail in the following paragraphs. The noise estimation step 104 terminates the estimation method according to the invention. Following the estimation, the noise may be suppressed in step 105 and the denoised image 107 may be obtained by computing the inverse DT-CWT in step 106. Experimental results have shown that the noise can be efficiently suppressed in a noisy reconstructed low-dose CT image 101 while preserving fine structures.

In this paragraph, some properties of CT noise after reconstruction using the Filtered Back Projection (FBP) algorithm are described. Although application of the current invention is not restricted or tied to any particular image reconstruction algorithm, the FBP algorithm is the most commonly used algorithm for reconstruction of raw CT data, also named projection data or sinogram data throughout this patent application. In Computed Tomography (CT), projection data are measured by an array of x-ray photon detectors that rotates around the patient. Since each measurement is influenced by the photons originating from various depths in the patient, a large set of projection data is required to reconstruct the image of one organ, e.g. the lungs in 101. Because of patient radiation dose limitations, noise in the projection data cannot be avoided. Even if it is assumed that the measurement noise in the projection data is white, i.e. uncorrelated noise, the noise after reconstruction of the image 101 will be correlated because of the correlations introduced by the reconstruction algorithm. These noise correlations are usually described in the frequency domain by the Power Spectral Density (PSD) which is defined as the squared magnitude of the Fourier Transform of the noise. It is known that for projection data corrupted with stationary Additive White Gaussian Noise (AWGN), the PSD of the noise after FBP reconstruction is given by:

$$S(\omega, \theta) = S_0 |\omega| |G(\omega)|^2 \tag{3}$$

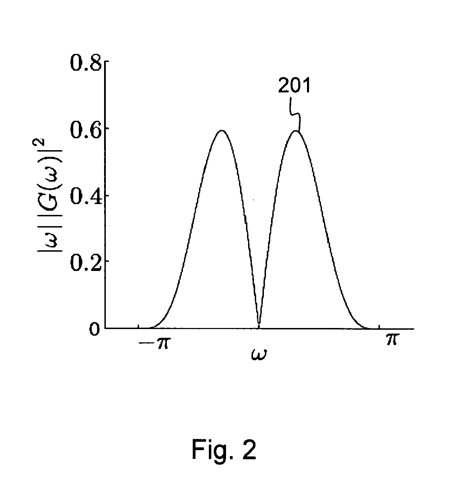

Herein, $(\omega, \theta)$ represents the polar frequency coordinates with w being the radial frequency and $\theta$ being the polar angle. $S_0$ represents the noise power and $G(\omega)$ is the frequency response of the smoothing filter used during the FBP reconstruction, i.e. a linear filter that is commonly used to suppress noise in the high frequency range. Fig. 2 illustrates the noise PSD 201 for the Hann filter. The low frequencies are attenuated by a ramp filter, while the high frequencies are suppressed by the smoothing filter.

Depending on the CT application, the type of smoothing filter is selected by a trade-off between the amount of noise left in the reconstructed image and the preservation of the high frequency content. To arrive at the PSD in equation (3), a stationary noise assumption is made. In practice, noise stationarity does not hold because the measurement noise, i.e. the photon noise, follows a signal-dependent Poisson distribution rather than a Gaussian distribution. The tissue densities vary with the projection angle and as a result it is possible that the detectors receive a smaller number of photons for some projection angles than for others. Because receiving fewer photons corresponds to increased noise, these projection angles will contribute more to the noise power than other angles. Consequently, the noise power is a function of the orientation. When taking this signal dependency into account the noise after reconstruction is additive and Gaussian with good approximation but not necessarily stationary. In a sufficiently small region within the reconstructed CT image, the PSD is then given by:

$$S(\omega, \theta) = S_0(\theta) |G(\omega)|^2 \tag{4}$$

Herein, $S_0(\theta)$ represents the noise power in the direction $\theta$. The PSD in other words is no longer rotationally symmetric. In general, the noise contains some dominant directions and is anisotropic.

Generally speaking, the noise power distribution $S_0(\theta)$ also may vary with the position in the image. Reconstructed CT images like 101 usually contain closed regions that are bounded by areas of high intensities. If the intensities in the surrounding part of a region are of approximately the same magnitude, then the noise in the closed region is approximately stationary. In the embodiment illustrated by the figures, it is therefore assumed that $S_0(\theta)$ does not depend on the position in the region but only on the angle $\theta$. The segmentation step in 102 is designed to arrive at regions wherein the constant $S_0(\theta)$ assumption is valid.

Indeed, noise is demonstrably stationary with an accuracy that is required for noise suppression in regions that are sufficiently small and closed. This stationary noise assumption may be understood starting from an artificial image obtained by scanning a metal cylinder. The noise inside such cylinder at a distance from the cylinder that is larger than 20 % of the cylinder's radius, can theoretically be proven to satisfy the stationary property. In case the shape of the object becomes more complex than a cylinder, e.g. an object with an elliptic circumference or a patient's belly contour, the stationary property of the noise will be influenced by this shape but statistical noise properties like the local NPSD will change only slightly. As a result, local stationarity may still be assumed. In medical imaging, the presence of vessels, organs, bones, vains, etc. will further complicate the image. Nevertheless, these structures will only have a limited, local influence on the noise statistical properties. Thus, the NPSD will change only within a limited area surrounding these structures, further justifying the local noise stationarity assumption made here above. An objective of the segmentation algorithm is to obtain regions that are sufficiently small and closed, e.g. fixed size blocks whose shape is determined by regions of interest (ROIs) and saturated areas. An alternative approach could rely on a sliding window of fixed size.

Parallel to the segmentation 102, each segment of the reconstructed CT image 101 is multi-resolution transformed in 103 using the Dual-Tree Complex Wavelet Transform or DT-CWT. Thus, although the noise PSD is specified in the frequency domain and the Discrete Fourier Transform or DFT would be an ideal choice of transform because it completely de-correlates the noise, the DFT is incapable of recovering information at particular positions and in particular directions in the spatial domain. This makes the DFT representation less convenient for analyzing the reconstructed CT images. On the other hand, the wavelet transform decomposes the signal over a set of base functions or sub-bands that are translates and dilates of the analyzing wavelet, also called mother wavelet. This results in a non-uniform partitioning of the time-frequency plane which allows retrieving information both in specific frequency bands and at spatial positions. In the embodiment illustrated by Fig. 1, the Dual-Tree Complex Wavelet Transform or DT-CWT is employed in step 103 instead of the traditional Discrete Wavelet Transform or DWT. The DT-CWT has an even better orientation selectivity with 6 orientation bands instead of 3 in a 2D image. The DT-CWT further is advantageous in that it provides a nearly shift invariant representation resulting in a better denoising performance.

For linear multi-resolution transforms, the noise PSD in a given sub-band of the transform can be computed as a function of the noise PSD in the image and the sub-band filters. Not taking decimations into account, the noise PSD for a given sub-band at scale s and orientation $\theta_k$, is given by:

$$S^{(s,\theta_k)}(\omega,\theta) = S_0(\theta)|\omega||G(\omega)|^2 \left|H^{(s,\theta_k)}(\theta,\omega)\right|^2 \qquad (5)$$

Herein, k represents an integer index representative for the orientation angle and ranging from 1 to 6. Further $H^{(s,\theta k)}(\theta,\omega)$ denotes the frequency response of the wavelet filter for scale s and direction $\theta_k$. Under the assumption of local noise stationarity and noting that $H^{(s,\theta k)}(\theta,\omega)$ performs an angular bandpass filtering, i.e. it passes information in certain orientations around $\theta_k$ while suppressing information in other orientations, the noise PSD for the sub-band $(s, \theta_k)$ can be approximated as follows:

$$S^{(s,\theta_k)}(\omega,\theta) \approx S_0(\theta_k) \left(|\omega||G(\omega)|^2 \left|H^{(s,\theta_k)}(\theta,\omega)\right|^2\right) \qquad (6)$$

As a result of the approximation in (6), the noise PSD for sub-band $(s, \theta_k)$ is a completely determined function upon the scaling factor $S_0(\theta_k)$. $G(w)$ and $H^{(s,\theta k)}(\theta, \omega)$ are indeed known advance. As will be explained in the following paragraphs, the scaling factor $S_0(\theta_k)$ will be estimated directly from the reconstructed CT image 101 in step 104 of Fig. 1.

In the following paragraphs, the notation of scale and orientation will be omitted because the same processing is applied in each wavelet sub-band. The noise-free wavelet coefficients will be denoted by $x_j$, the noise coefficients by $n_j$ and the observed wavelet coefficients by $y_j$. Herein, the one-dimensional integer index j = 1 ... N denotes the spatial position, like in raster scanning. The vectors are formed by extracting wavelet coefficients in a local M by M window centered at position j. M may for instance be 3. The real parts and the imaginary parts of the complex wavelet coefficients may be handled as different sub-bands, such that $x_j$, $n_j$ and $y_j$ are real-valued with respective covariance matrices $C_x$, $C_n$ and $C_y$.

In the following paragraph, the noise is assumed to be additive. The noise in the measured projection data is signal dependent. Nevertheless, this noise can be approached with a Gaussian distribution whose mean value corresponds to the noise free projection data $P(\theta,t)$ and whose variance is a function of the noise free projection data $P(\theta,t)$. In other words, the measured projection data is a Gaussian random field with mean value $P(\theta,t)$ and variance $\sigma^2(P(\theta,t))$. Because the FBP algorithm is linear, the image obtained by Filtered Back Projection of the measured projection data is also a Gaussian random field whose mean value equals the noise-free image. Such Gaussian noise with mean value different from zero is equivalent to an image with additive Gaussian noise with mean value equal to zero. This explains the additive noise assumption for the reconstructed image.

As a result of the additive noise in the reconstructed image and the linearity of the DT-CWT:

$$y_j = x_j + n_j \qquad (7)$$

In the Bayesian model, prior knowledge is imposed on the missing $x_j$ in terms of a probability density function. It is known that empirical joint histograms of noise-free wavelet coefficients are typically symmetric, highly kurtotic and elliptically contoured. Although other priors are possible, $x_j$ is supposed to be modeled using the multivariate Bessel K Form (BKF) in this embodiment. This density has the following Gaussian Scale Mixture (GSM) representation:

$$x \stackrel{d}{=} z^{\frac{1}{2}} u \qquad (8)$$

Herein, the operator $\stackrel{d}{=}$ denotes equality in distribution, u is a Gaussian random vector with distribution $N(0,C_x)$ and z is a hidden multiplier that is Gamma distributed as follows:

$$f_Z(z) = \frac{1}{\Gamma(\tau)} z^{\tau-1} e^{-z} \qquad (9)$$

Herein, $\Gamma(\tau) = \int_0^\infty z^\tau e^{-z} dz$ represents the Gamma function. Using this GSM representation, the power distribution function of x can be written as follows:

$$f_X(x) = \int_0^{+\infty} f_{X|Z}(x|z) f_Z(z) dz \qquad (10)$$

Herein X|Z has distribution $N(0, zC_x)$. Typically, the integral in (10) is evaluated using numerical techniques. For the Bessel K Form, a closed-form expression based on Bessel functions also exists. The parameter T determines the kurtosis of $f_x(x)$: the kurtosis is given by 3+3/T, where a kurtosis of 3 or T→∞ corresponds to a Gaussian distribution. Basically, the original wavelet sub-band can be estimated using for instance the following Bayesian Minimum Mean Square Error (MMSE) estimator:

$$\hat{y}_j = E(x_j|y_j) \qquad (11)$$

Although this estimator gives theoretically the best trade-off between noise suppression and detail preservation, the resulting images in medical applications are often slightly blurred. To overcome this deficiency, an extra hypothesis is introduced regarding the wavelet coefficients, that expresses that details are present - the signal present hypothesis $H_0$) or rather noise is present (the signal absent hypothesis $H_1$).

To distinguish between these two hypotheses, the following significance measure can be used:

$$\rho(x_j) = I\left(\left\|C_n^{-\frac{1}{2}}x_j\right\| \geq T\right) \tag{12}$$

Herein, $C_n$ represents the noise covariance matrix for the considered wavelet sub-band, orientation and segment, and T represents a threshold that defines the signal of interest. The matrix multiplication de-correlates the signal according to the noise covariance matrix. The parameter T can either be tuned analytically, e.g. to optimize a given criterion, or can be set by the radiologist. Small T values will likely suppress more noise but may obstruct signal structures while large T values will prevent signal structures from being destroyed with possibly noise remaining.

The hypotheses for wavelet coefficient vector $x_j$ can be stated as follows:

$$\begin{cases} H_0: & \rho(x_j) = 0 \quad \text{signal absent} \\ H_1: & \rho(x_j) = 1 \quad \text{signal present} \end{cases} \tag{13}$$

According to this model, the MMSE estimator becomes:

$$\hat{x}_j = E(x_j|y_j, H_0)P(H_0|y_j) + E(x_j|y_j, H_1)P(H_1|y_j) \tag{14}$$

Simplifications can be made: $E(x_j|y_j, H_0) \approx 0$ and $E(x_j|y_j, H_1) \approx x_j$. This way, an estimate of the noise-free wavelet coefficient vector is obtained by scaling or shrinking with the probability that it represents the signal of interest:

$$\hat{x}_j = P(H_1|y_j)y_j \tag{15a}$$

$$\hat{x}_j = \left(1 - P(H_0|y_j)\right)y_j \tag{15b}$$

$$\hat{x}_j = \left(1 - \frac{f_{Y|H_k}(y_j|H_0)P(H_0)}{f_Y(y_j)}\right) \tag{15c}$$

Herein, the conditional density function $f_{Y|Hk}(y_j|H_0)$ and the density $f_Y(y_j)$ are respectively given by:

$$f_{Y|H_k}(y_j|H_0) = \int_0^\infty N\left(y_j; 0, C_y^{H_0}(z)\right)f_z dz \tag{16}$$

and:

$$f_Y(y_j) = \int_0^\infty N(y_j; 0, zC_x + C_n) f_z dz \tag{17}$$

In (16) and (17), N(y;0,C) represents the Gaussian density function evaluated in y and:

$$C_y^{H_0}(z) = ((zC_x)^{-1} + (T^2 C_n)^{-1})^{-1} + C_n \tag{18}$$

The probability that the signal of interest is absent on the considered wavelet sub-band, can be written as follows:

$$P(H_0) = 1 - P(H_1) = \int_0^{+\infty} \frac{\left|T^2(zC_x)^{-1}\right|^{\frac{1}{2}}}{\left|T^2(zC_x)^{-1} + (C_n)^{-1}\right|^{\frac{1}{2}}} f_z(z) dz \tag{19}$$

This expression also shows how the threshold T is related to the notion of signal presence: if $T \to 0$, then $P(H_0) \to 0$, hence no processing will be performed: $\hat{x}_j = y_j$. On the other hand, if $T \to 1$ then the probability that the signal is present becomes very small: $P(H_1) \to 0$ and eventually $\hat{x}_j = 0$.

In order to apply the probabilistic shrinkage technique, several model parameters have to be determined. First, an estimate of the noise covariance matrix $C_n$ is required for each segment. Based on the Wiener-Khintchin theorem, this covariance matrix can be easily obtained from the noise PSD for this sub-band, i.e. equation (6). As a consequence, only the parameters $S_0(k)$ is left to estimate. To estimate $S_0(k)$ the MAD estimator for the k-th orientation of the first scale of the DT-CWT can be used:

$$\hat{S}_0(\theta_k) = A_k^{-1} \left( \frac{\text{median }_j \left| y_j^{(1,k)} \right|}{0.6745} \right)^2 \tag{20}$$

Herein,

$$A_k = \int_0^\pi d\theta \int_0^\pi d\omega |\omega| |G(\omega)|^2 \left| H^{1,\theta_k}(\theta, \omega) \right|^2 \tag{21}$$

is a power normalisation constant that depends on the wavelet filters of the first scale and that can computed offline.

It is noticed that alternative Bayesian estimates, based on the EM algorithm are often more efficient and can be used instead, but usually at a much higher computational cost.

The covariance matrix $C_y$ is estimated for each wavelet band using Maximum Likelihood estimation:

$$\hat{C}_y = \frac{1}{N} \sum_{j=1}^N y_j y_j^T \tag{22}$$

Next, the T parameter of the BKF is estimated by matching cumulants:

$$\hat{\tau} = 3(\hat{k}_4)^{-1} \max\left(0, \hat{k}_2 - \text{trace}(\hat{C}_n)/M^2\right) \qquad (23)$$

wherein $\hat{k}_n$ represents an empirical estimate of the n'th cumulant of $y_j$, with j = 1 ...N.

It is noticed that formula (23) for estimating the kurtosis parameter is only given as an example. Alternatives exist, such as for instance an estimate based on an EM algorithm.

At last, the signal covariance matrix $C_x$ is obtained as follows:

$$\hat{C}_x = \hat{\tau}^{-1}\left(\hat{C}_y - \hat{C}_n\right)_+ \qquad (24)$$

Herein, $(\cdot)_+$ replaces negative eigenvalues of $(\cdot)$ with positive ones, such that the result is positive definite and a proper covariance matrix. This correction is sometimes needed to compensate for statistical estimation errors in equations (20) and (22).

The proposed method, illustrated by Fig. 1, efficiently removes the correlated noise on the CT images while better preserving fine image structures like bronchi. Existing techniques that operate on sinogram data cause severe oversmoothing that leads to the destruction of fine structures. These methods are not adapted to the signal-dependency of the noise in the sinogram data. As a result, the noise variance is underestimated in some places of the sinogram and overestimated in other places, causing blurring and leaving noise in the reconstructed image. The method according to the invention generally yields a higher image quality because the method is better adapted to the local noise statistics, both in frequency and space.

On a 2.0 GHz processor, a Matlab implementation of the invented method with critical parts implemented in C-language takes on average 0.6 s for denoising a 512 x 512 CT slice.

Using a position dependent NPSD, further improvements are obtained, especially when dealing with strong directional streaking artifacts. Also, information from other CT slices can be used to obtain a more accurate estimate of the noise-free CT image.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. In particular, the optional elements, features or steps that are described with respect to certain embodiments of the invention, e.g. the choice of segmentation or sliding window, the choice of a particular multi-resolution transformation, the choice of a particular segmentation algorithm, the noise stationarity assumption, etc. may be combined differently to establish alternative embodiments according to the current invention. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1.  A method for estimating noise in a reconstructed image (101) through post-processing of said reconstructed image (101), said method comprising the steps of:

    - dividing (102) said reconstructed image (101) to thereby generate image segments;
    - applying a multi-resolution transformation (103) or directional filter bank on at least part of said image segments to thereby generate transformed image segments; and
    - for each transformed image segment:

        - estimating a direction dependent noise power $S_0(\theta)$;
        - estimating a noise covariance matrix;
        - estimating a sub-band covariance matrix of noise and signal for said multi-resolution transformation;
        - estimating a kurtosis parameter T of said signal;
        - calculating a signal covariance matrix; and
        - calculating a noise covariance matrix in said transformed image segment.

2.  A method for estimating noise in a reconstructed image (101) according to claim 1, wherein said multi-resolution transformation (103) comprises any one of the following:

    - a wavelet transformation;
    - a curvelet transformation;
    - a shearlet transformation.

3.  A method for estimating noise in a reconstructed image (101) according to claim 1, wherein said multi-resolution transformation (103) consists of a Dual-Tree Complex Wavelet Transformation or DT-CWT.

4.  A method for estimating noise in a reconstructed image (101) according to any of claims 1 to 3, wherein said step of estimating said direction dependent noise power $S_0(\theta)$ is based on a Bayesian estimator.

5.  A method for estimating noise in a reconstructed image (101) according to any of claims 1 to 3, wherein said step of estimating said direction dependent noise power $S_0(\theta)$ is based on the MAD estimator.

6.  A method for estimating noise in a reconstructed image (101) according to any of claims 1 to 5, wherein said step of dividing (102) said reconstructed image (101) comprises segmenting said reconstructed image (101) in non-overlapping segments.

7.  A method for estimating noise in a reconstructed image (101) according to claim 6, wherein segmenting (102) said reconstructed image (101) comprises one or more of the following:

    - a watershed segmentation;
    - a threshold segmentation algorithm;
    - a connected components algorithm;
    - a region merging algorithm; and
    - skipping non-interesting segments.

8.  A method for estimating noise in a reconstructed image (101) according to claim 6 or claim 7, wherein said method assumes local noise stationarity within each segment.

9.  A method for estimating noise in a reconstructed image (101) according to any of claims 1 to 5, wherein said step of dividing (102) said reconstructed image (101) comprises dividing said reconstructed image (101) in overlapping segments or windows.

10. A method for estimating noise in a reconstructed image (101) according to claim 9, wherein said method assumes a position dependent noise power spectral density (NPSD).

11. A method for estimating noise in a reconstructed image (101) according to any of claims 1 to 10, said method further comprising the step of:

- denoising (105, 106) said image segments to thereby generate noise-reduced image segments constituting a noise-reduced reconstructed image (107).

12. A method for estimating noise in a reconstructed image (101) according to any of claims 1 to 11, said method further comprising the step of:

- estimating noise in a corresponding sinogram from noise estimated in said reconstructed image (101).

13. A device for estimating noise in a reconstructed image (101) through post-processing of said reconstructed image (101), said device being adapted to perform the method as defined by any of claims 1 to 12.

14. A software program for estimating noise in a reconstructed image (101) through post-processing of said reconstructed image (101), said software program being adapted to instruct execution of the method as defined by any of claims 1 to 12.

Fig. 1

Fig. 2

Europäisches
Patentamt

European
Patent Office

Office européen
des brevets

## EUROPEAN SEARCH REPORT

Application Number

EP 10 00 4848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | GOOSSENS B ET AL: "Low-Dose CT Image Denoising By Locally Adaptive Wavelet Domain Estimation" PROCEEDINGS OF THE IEEE BENELUX EMBS SYMPOSIUM. ENGINEERING IN MEDICINE AND BIOLOGY; DECEMBER 6-7, 2007, HEEZE, THE NETHERLANDS,, 6 December 2007 (2007-12-06), XP009136468 * the whole document * | 1-11,13, 14 | INV. G06T5/00 |
| Y | GOOSSENS B ET AL: "Removal of Correlated Noise by Modeling the Signal of Interest in the Wavelet Domain" IEEE TRANSACTIONS ON IMAGE PROCESSING, IEEE SERVICE CENTER, PISCATAWAY, NJ, US LNKD- DOI:10.1109/TIP.2009.2017169, vol. 18, no. 6, 1 June 2009 (2009-06-01), pages 1153-1165, XP011268485 ISSN: 1057-7149 * page 1156 * * page 1158 * * page 1160 * | 1-11,13, 14 | |
| A | BART GOOSSENS ET AL: "EM-based estimation of spatially variant correlated image noise" IMAGE PROCESSING, 2008. ICIP 2008. 15TH IEEE INTERNATIONAL CONFERENCE, IEEE, PISCATAWAY, NJ, USA, 12 October 2008 (2008-10-12), pages 1744-1747, XP031374359 ISBN: 978-1-4244-1765-0 * the whole document * -/-- | 1-14 | TECHNICAL FIELDS SEARCHED (IPC) G06T |

The present search report has been drawn up for all claims

| Place of search | Date of completion of the search | Examiner |
|---|---|---|
| Munich | 21 September 2010 | Rockinger, Oliver |

EPO FORM 1503 03.82 (P04C01)

**EUROPEAN SEARCH REPORT**

Application Number

EP 10 00 4848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JOSE A GUERRERO-COLON ET AL: "Image Restoration Using Space-Variant Gaussian Scale Mixtures in Overcomplete Pyramids" IEEE TRANSACTIONS ON IMAGE PROCESSING, IEEE SERVICE CENTER, PISCATAWAY, NJ, US LNKD- DOI:10.1109/TIP.2007.911473, vol. 17, no. 1, 1 January 2008 (2008-01-01), pages 27-41, XP011197524 ISSN: 1057-7149 * the whole document * ----- | 1-14 | |

TECHNICAL FIELDS SEARCHED (IPC)

The present search report has been drawn up for all claims

| Place of search | Date of completion of the search | Examiner |
|---|---|---|
| Munich | 21 September 2010 | Rockinger, Oliver |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080095462 A, Hsieh

- US 20090232269 A

**Non-patent literature cited in the description**

- **B. GOOSSENS ; J. DE BOCK ; A. PIZURICA ; W. PHILIPS.** Low-Dose CT Image Denoising by Locally Adaptive Wavelet Domain Estimation. *IEEE Benelux EMBS Symposium,* 06 December 2007

- **D.L. DONOHO.** De-noising by soft-thresholding. *IEEE Trans. Inform. Theory,* May 1995, vol. 41, 613-627